# EUROPÄISCHE PATENTSCHRIFT

(11) **EP 2 727 167 B1**
(45) Veröffentlichungstag und Bekanntmachung des Hinweises auf die Patenterteilung: **11.03.2015**
(21) Anmeldenummer: 12729874.3
(22) Anmeldetag: 20.06.2012
(51) Int. Cl.: H01M 2/10, B60L 3/00, B60K 1/04, B60L 11/18

(54) **ANORDNUNG VON BATTERIEMODULEN IN EINEM FAHRZEUG UND FAHRZEUG**
ARRANGEMENT OF BATTERY MODULES IN A VEHICLE AND VEHICLE
AGENCEMENT DE MODULES DE BATTERIES DANS UN VÉHICULE AUTOMOBILE ET VÉHICULE AUTOMOBILE

(30) Priorität: 30.06.2011 DE 102011106090
(43) Veröffentlichungstag der Anmeldung: 07.05.2014
(73) Patentinhaber: Audi AG, 85045 Ingolstadt (DE)
(72) Erfinder: KORTE, Michael, 85055 Ingolstadt (DE); ENNING, Norbert, 85095 Denkendorf (DE)
(74) Vertreter: Herbst, Matthias Heinz
(86) Internationale Anmeldenummer: PCT/EP2012/002594
(87) Internationale Veröffentlichungsnummer: WO 2013/000548

(56) Entgegenhaltungen:
- EP-A1- 2 418 709
- DE-A1-102008 010 822

## Beschreibung

Die Erfindung betrifft eine Anordnung von eine Mehrzahl von Batteriezellen umfassenden Batteriemodulen in einem Fahrzeug. Hierbei sind die Batteriemodule in einem Zwischenraum zwischen einer unteren Platte und einer oberen Platte einer Karosseriebaugruppe angeordnet. Des Weiteren betrifft die Erfindung ein Fahrzeug mit einer solchen Anordnung.

Die DE 10 2008 010 822 A1 beschreibt ein Batteriemodul mit einem Batteriegehäuse, in welchem eine Mehrzahl von Einzelzellen angeordnet sind. Das Batteriegehäuse umfasst mehrere Gehäusesegmente mit einer oberen Gehäuseplatte und einer unteren Gehäuseplatte, zwischen welchen die Einzelzellen aufgenommen sind. Die Gehäusesegmente sind über Verbindungselemente miteinander verbunden, welche aus zwei Teilelementen mit zueinander entgegengesetzt verlaufenden Schrägen aufgebaut sind. Bei einer Deformation des Batteriegehäuses werden die Gehäusesegmente übereinander geschoben, so dass die Gehäusesegmente weitgehend intakt bleiben.

Die DE 10 2005 054 453 A1 beschreibt eine Anordnung von einzelnen Batteriezellen unterhalb eines Kofferraumbodens eines Fahrzeugs. Die einzelnen Batteriezellen haben eine im Wesentlichen flache, parallelepipedförmige Gestalt mit zwei einander gegenüberliegenden Hauptbegrenzungswänden und zwei einander gegenüberliegenden Randflächen. Die in Reihen angeordneten Batteriezellen sind in jeder Reihe derart orientiert, dass sich in einer schuppenartigen Weise die einander gegenüberliegenden Hauptbegrenzungswände überlappen. Hierbei sind die Hauptbegrenzungswände schräg ausgerichtet. Bei einer Kollision können so die Batteriezellen aufeinander abgleiten.

Die nach dem Anmeldetag der vorliegenden Anmeldung veröffentlichte EP 2 418 709 A1 beschreibt ein Batteriepack mit einer Mehrzahl von Batteriemodulen, wobei die einzelnen Batteriemodule wiederum eine Mehrzahl von zylinderförmigen Batteriezelle umfassen. Die Batteriemodule sind im Querschnitt trapezförmig ausgebildet, wobei eine Packungseinheit, welche ein Batteriemodul und ein Deformationselement umfasst, im Querschnitt eine Dreiecksform aufweist. Zwischen den im Querschnitt trapezförmigen Batteriemodulen ergeben sich also Freiräume, welche durch die Deformationselemente gefüllt sind.

Bei der DE 10 2008 059 973 A1 umschließt ein jeweiliger Rahmen eine Mehrzahl von Batteriezellen. Mehrere solcher Rahmen, welche eine Innenhülle bilden, sind in einer Außenhülle angeordnet, welche durch Gehäuseschalen aus Blech gebildet ist. Bei einer Deformation der Außenhülle werden die Rahmen relativ zueinander verschoben.

Die FR 2 961 442 A1 beschreibt einen Batterieblock mit Batteriemodulen, wobei an Stirnseiten der Batteriemodule keilförmige Elemente angeordnet sind. Bei einer Kraftbeaufschlagung wirken die keilförmigen Elemente als Rampen, und die Module gleiten übereinander.

Die DE 10 2008 027 132 A1 betrifft eine Tragstruktur für ein Kraftfahrzeug, in welchem der Fahrzeugboden abschnittsweise als sogenannter Doppelboden ausgebildet ist. Zwischen einem Unterboden und einem Fußboden des Fahrzeugbodens befinden sich Installationsbereiche für Batterien oder Elektronikbauteile.

Die US 5 833 023 A beschreibt eine Bodenstruktur für ein Elektrofahrzeug, bei welchem in einem zwischen zwei Platten eines Fahrzeugbodens ausgebildeten, balkenförmigen Zwischenraum ein Batteriemodul untergebracht ist.

Die US 2010/0133030 A1 beschreibt ein Motorrad, bei welchem eine Tragstruktur einen Vorbau für ein Vorderrad des Motorrads mit einem Heckbereich für ein Hinterrad verbindet. Die Tragstruktur bildet ein Gitterwerk mit dreieckförmigen Aufnahmeöffnungen, in welchen Batteriepakete aufgenommen sind. Jedes Batteriepaket umfasst eine Mehrzahl von Batteriezellen.

Aufgabe der vorliegenden Erfindung ist es, eine Anordnung sowie ein Fahrzeug der eingangs genannten Art zu schaffen, bei welcher bzw. bei welchem die Batteriemodule bei einer unfallbedingten Kraftbeaufschlagung besonders gut geschützt sind.

Diese Aufgabe wird durch eine Anordnung mit den Merkmalen des Patentanspruchs 1 und durch ein Fahrzeug mit den Merkmalen des Patentanspruchs 9 gelöst. Vorteilhafte Ausgestaltungen mit zweckmäßigen Weiterbildungen der Erfindung sind in den abhängigen Patentansprüchen angegeben.

Bei der erfindungsgemäßen Anordnung weisen wenigstens zwei benachbarte Batteriemodule jeweilige Gleitflächen auf, entlang welcher die beiden benachbarten Batteriemodule infolge einer Kraftbeaufschlagung relativ zueinander verschiebbar sind. Dadurch können bei einer unfallbedingten Kraftbeaufschlagung die Batteriemodule ausweichen, indem sie entlang der Gleitflächen aneinander entlanggleiten. Eine Beschädigung der Batteriemodule wird hierbei vermieden. Die Batteriemodule ändern also bei einer unfallbedingten Kraftbeaufschlagung ihre Lage im Zwischenraum zwischen den beiden Platten der Karosseriebaugruppe, jedoch werden sie nicht - oder allenfalls geringfügig - verformt. Eine solche Karosseriebaugruppe ist besonders crashtolerant, da die Batteriemodule bei einem Unfall gut geschützt sind. Durch die Karosseriebaugruppe kann insbesondere ein Deformationsbereich des Fahrzeugs bereitgestellt sein, also ein Bereich, in welchem bei einem Aufprall durch Verformung von Komponenten der Karosseriebaugruppe Aufprallenergie abgebaut wird.

Erfindungsgemäß weisen die Batteriemodule jeweils die Form eines dreiseitigen Prismas auf, wobei eine Basis eines jeweiligen Prismas abwechselnd der unteren Platte und der oberen Platte des Fahrzeugbodens zugewandt ist und durch an die Basis angrenzende Seitenflächen der dreiseitigen Prismen die Gleitflächen bereitgestellt sind. Dann weist nämlich jedes Batteriemodul zwei Gleitflächen auf, entlang welcher die Verschiebung relativ zu den benachbarten Batteriemodulen erfolgen kann. Insbesondere, wenn das Prisma im Querschnitt die Form eines gleichseitigen Dreiecks aufweist, lässt sich der Raum zwischen den beiden Platten der Karosseriebaugruppe besonders weitgehend und ohne ein Auftreten größerer Lücken zwischen den Batteriemodulen ausnutzen. Zudem weisen dann die Gleitflächen eine Neigung auf, welche das Ausweichen der Batteriemodule bei der unfallbedingten Kraftbeaufschlagung der Karosseriebaugruppe besonders einfach macht.

Wenn gemäß einer vorteilhaften Ausgestaltung der Erfindung die Karosseriebaugruppe einen Fahrzeugboden umfasst, so kann eine besonders große Anzahl von Batteriemodulen gut geschützt im Zwischenraum zwischen der oberen Platte und der unteren Platte des Fahrzeugbodens untergebracht werden.

In einem - in Fahrzeuglängsrichtung gesehen - mittleren Bereich der Karosseriebaugruppe können die Batteriemodule so angeordnet sein, dass ihre Längserstreckungsrichtung im Wesentlichen mit der Fahrzeuglängsrichtung zusammenfällt. Bei einer solchen Anordnung der Batteriemodule können aneinander entlang gleitende Batteriemodule sich besonders gut nach oben oder nach unten bewegen, wenn die Kraftbeaufschlagung von einem Seitenaufprall des Fahrzeugs herrührt.

Als weiter vorteilhaft hat es sich gezeigt, wenn eine Längserstreckungsrichtung der in einem Frontbereich und/oder in einem Heckbereich der Karosseriebaugruppe angeordneten Batteriemodule im Wesentlichen mit einer Fahrzeugquerrichtung zusammenfällt. Dann werden die Batteriemodule bei einem Heckaufprall oder bei einem Frontaufprall besonders gut relativ zueinander entlang der Gleitflächen verschoben. Im Heckbereich kann insbesondere ein Laderaumboden besonders gut zur Unterbringung der Batteriemodule genutzt werden. Insbesondere im Frontbereich oder Vorbau des Fahrzeugs können auch Stapel von Platten vorgesehen sein, wobei in jeweiligen Zwischenräumen zwischen den Platten die Batteriemodule untergebracht sind.

In einer weiteren vorteilhaften Ausgestaltung der Erfindung umfasst ein jeweiliges Batteriemodul eine Mehrzahl von Batteriezellen, welche in einem die Gleitflächen bereitstellenden Grundkörper aufgenommen sind. Der Grundkörper sorgt dann dafür, dass die Batteriezellen bei einem Verschieben der Batteriemodule relativ zueinander nicht beschädigt werden. Insbesondere, wenn der Grundkörper aus einem Kunststoff und/oder aus einem Metall gebildet ist, lassen sich gut besonders reibungsarme Gleitflächen realisieren, entlang welcher die Batteriemodule bei der unfallbedingten Kraftbeaufschlagung relativ zueinander verschoben werden.

Der Grundkörper kann als Gehäuse für die Batteriezellen ausgebildet sein und so zugleich einen Schutz für die Batteriezellen zu deren Umgebung hin bereitstellen. Dann stellt wenigstens eine Wand des Gehäuses die entsprechende Gleitfläche bereit.

Zusätzlich oder alternativ kann der Grundkörper als Tragstruktur für die Batteriezellen ausgebildet sein. So kann ein, etwa durch Strangpressen gebildeter Grundkörper Aufnahmeöffnungen für die Batteriezellen bilden, in welchen die Batteriezellen des Batteriemoduls aufgenommen sind. Hier können dann Außenkanten oder äußere Seitenflächen der Tragstruktur die Gleitflächen bereitstellen.

Schließlich hat es sich als vorteilhaft gezeigt, wenn die Batteriezellen als Rundzellen ausgebildet sind. Derartige Batteriezellen ermöglichen eine besonders platzsparende Unterbringung derselben in dem Batteriemodul, wenn das Batteriemodul die schrägen Gleitflächen aufweist.

Bei dem erfindungsgemäßen Fahrzeug sind die Gleitflächen aufweisenden Batteriemodule in dem Zwischenraum zwischen den beiden Platten einer Karosseriebaugruppe angeordnet, und das Fahrzeug weist einen elektrischen Antrieb auf. Hierbei dienen die Batteriemodule dem Speichern von elektrischer Energie für den elektrischen Antrieb des Fahrzeugs. Bei einem solchen Fahrzeug lässt sich eine vergleichsweise große Energiemenge speichern, indem der Zwischenraum zwischen der oberen Platte und der unteren Platte der Karosseriebaugruppe zur Unterbringung der Batteriemodule genutzt wird. Zudem sind in dem Fahrzeug die Batteriemodule bei einem Unfall besonders gut geschützt untergebracht, da die Batteriemodule die Gleitflächen aufweisen.

Die für die erfindungsgemäße Anordnung beschriebenen Vorteile und bevorzugten Ausführungsformen gelten auch für das erfindungsgemäße Fahrzeug.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: schematisiert und in einer Schnittansicht ein Kraftfahrzeug, wobei innerhalb eines doppelten Fahrzeugbodens Batteriemodule angeordnet sind, welche jeweils die Form eines dreiseitigen Prismas aufweisen; und
- Fig. 2: eine Perspektivansicht eines Pakets dreier solcher prismatischer Batteriemodule gemäß Fig. 1.

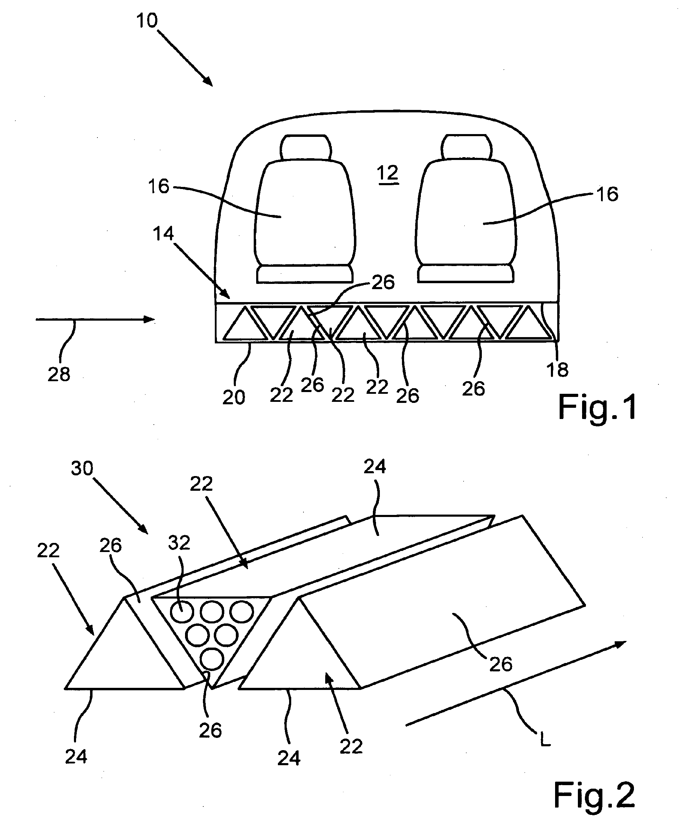

Von einem Fahrzeug 10 ist in Fig. 1 schematisch eine Fahrgastzelle 12 gezeigt, welche nach unten hin durch einen Fahrzeugboden 14 begrenzt ist. Auf dem Fahrzeugboden 14 befinden sich zwei Sitze 16 für die Insassen des Fahrzeugs 10.

Der Fahrzeugboden 14 ist als Doppelboden ausgebildet, d.h. er umfasst eine obere Platte 18 und eine untere Platte 20. Zwischen den beiden Platten 18, 20, welche sich vorliegend über die gesamte Breite der Fahrgastzelle 12 erstrecken, ist ein Zwischenraum vorhanden, welcher von Batteriemodulen 22 eingenommen ist.

Die Batteriemodule 22 haben die Form dreiseitiger Prismen mit jeweils gleich großen Seitenflächen. Die Batteriemodule 22 sind derart in dem Fahrzeugboden 14 angeordnet, dass eine Basis 24 (vgl. Fig. 2) oder Mantelfläche eines jeweiligen Prismas alternierend der unteren Bodenplatte 20 und der oberen Bodenplatte 18 zugewandt ist.

Durch die an die Basis 24 angrenzenden Seitenflächen der Prismen sind Gleitflächen 26 bereitgestellt, entlang welcher die Batteriemodule 22 relativ zueinander verschoben werden, wenn bei einem Unfall eine Kraftbeaufschlagung quer zu ihrer Längserstreckungsrichtung L (vgl. Fig. 2) auf die Batteriemodule 22 einwirkt.

In Fig. 1 ist durch einen Kraftpfeil 28 die Kraftbeaufschlagung einer den Fahrzeugboden 14 umfassenden Karosseriebaugruppe bei einem Seitenaufprall des Fahrzeugs 10 veranschaulicht. Eine derartige Kraftbeaufschlagung bewirkt, dass die Batteriemodule 22 in dem Zwischenraum zwischen der unteren Platte 20 und der oberen Platte 18 in Fahrzeughochrichtung verschoben werden. Die Batteriemodule 22 gleiten dabei entlang ihrer Gleitflächen 26 aneinander entlang, bleiben jedoch in sich stabil und werden bei dem Seitenaufprall nicht - oder allenfalls geringfügig - deformiert.

Wie aus Fig. 1 ersichtlich, können die Batteriemodule 22 im Bereich der Fahrgastzelle 12 derart im Fahrzeugboden 14 angeordnet sein, dass ihre Längserstreckungsrichtung L mit der Fahrzeuglängsrichtung zusammenfällt. Dann können sie bei dem Seitenaufprall besonders gut entlang ihrer Gleitflächen 26 relativ zueinander verschoben werden.

So wie vorliegend beispielhaft für den Fahrzeugboden 14 gezeigt, kann eine doppelwandige Karosseriebaugruppe mit einer oberen Platte 18 und einer unteren Platte 20 zusätzlich oder alternativ in einem Frontbereich und/oder in einem Heckbereich des Fahrzeugs 10 vorgesehen sein. Hier untergebrachte Batteriemodule 22 können dann insbesondere derart angeordnet sein, dass ihre Längserstreckungsrichtung L mit der Fahrzeugquerrichtung zusammenfällt. Dann werden die Batteriemodule 22 bei einem Frontaufprall oder einem Heckaufprall nach oben oder nach unten aus einem eine Mehrzahl von Batteriemodulen 22 umfassenden Paket 30 (vgl. Fig. 2) herausgedrückt. In dem Paket 30 bilden die an die Basis 24 angrenzenden Seitenflächen der dreiseitigen Prismen die Gleitflächen 26.

Aus Fig. 2 ist des Weiteren ersichtlich, dass die Gleitflächen 26 und die Basis 24 durch ein Gehäuse der Batteriemodule 22 bereitgestellt sind, in welchem eine Mehrzahl von - vorliegend als Rundzellen 32 ausgebildeten - Batteriezellen aufgenommen ist. Das Gehäuse kann aus einem Metall oder aus einem Kunststoff gebildet sein und die Batteriezellen nach außen hin schützen.

Zusätzlich oder alternativ können die Basis 24 und die Gleitflächen 26 der Batteriemodule 22 durch einen Grundkörper gebildet sein, welcher nach Art einer Tragstruktur Aufnahmeöffnungen für die Rundzellen 32 aufweist. Ein solcher Grundkörper kann, insbesondere durch Strangpressen, aus einer Aluminiumlegierung gebildet sein. Jedoch kann auch hier als Material des Grundkörpers ein Kunststoff zum Einsatz kommen.

Bei dem Fahrzeug 10 handelt es sich bevorzugt um ein Elektrofahrzeug, bei welchem die Batteriemodule 22 die elektrische Energie für einen elektrischen Antrieb des Fahrzeugs 10 speichern. Das Fahrzeug 10 kann auch als Hybridfahrzeug mit einem solchen elektrischen Energiespeicher ausgebildet sein, welches zusätzlich zum elektrischen Antrieb einen Verbrennungsmotor aufweist.

## Patentansprüche

1. Anordnung von eine Mehrzahl von Batteriezellen (32) umfassenden Batteriemodulen (22) in einem Fahrzeug (10) in einem Zwischenraum zwischen einer unteren Platte (20) und einer oberen Platte (18) einer Karosseriebaugruppe (14),
**dadurch gekennzeichnet, dass**
wenigstens zwei benachbarte Batteriemodule (22) jeweilige Gleitflächen (26) aufweisen, entlang welcher die beiden benachbarten Batteriemodule (22) infolge einer Kraftbeaufschlagung (28) unter Änderung ihrer Lage in dem Zwischenraum zwischen den beiden Platten (20, 18) der Karosseriebaugruppe (14) relativ zueinander verschiebbar sind, wobei die Batteriemodule (22) die Form eines dreiseitigen Prismas aufweisen und wobei eine Basis (24) eines jeweiligen Prismas abwechselnd der unteren Platte (20) und der oberen Platte (18) zugewandt ist und durch an die Basis (24) angrenzende Seitenflächen der dreiseitigen Prismen die Gleitflächen (26) bereitgestellt sind.

2. Anordnung nach Anspruch 1,
**dadurch gekennzeichnet, dass**
die Karosseriebaugruppe einen Fahrzeugboden (14) umfasst.

3. Anordnung nach Anspruch 1 oder 2,
**dadurch gekennzeichnet, dass**
eine Längserstreckungsrichtung (L) der in einem mittleren Bereich der Karosseriebaugruppe (14) angeordneten Batteriemodule (22) im Wesentlichen mit einer Fahrzeuglängsrichtung zusammenfällt.

4. Anordnung nach einem der Ansprüche 1 bis 3,
**dadurch gekennzeichnet, dass**
eine Längserstreckungsrichtung (L) der in einem Frontbereich und/oder in einem Heckbereich der Karosseriebaugruppe angeordneten Batteriemodule (22) im Wesentlichen mit einer Fahrzeugquerrichtung zusammenfällt.

5. Anordnung nach einem der Ansprüche 1 bis 4,
**dadurch gekennzeichnet, dass**
die Batteriezellen (32) eines jeweiligen Batteriemoduls (22) in einem die Gleitflächen (26) bereitstellenden Grundkörper aufgenommen sind.

6. Anordnung nach Anspruch 5,
**dadurch gekennzeichnet, dass**
der Grundkörper als Gehäuse für die Batteriezellen (32) ausgebildet ist.

7. Anordnung nach Anspruch 5 oder 6,
**dadurch gekennzeichnet, dass**
der Grundkörper als Tragstruktur für die Batteriezellen (32) ausgebildet ist.

8. Anordnung nach einem der Ansprüche 1 bis 7,
**dadurch gekennzeichnet, dass**
die Batteriezellen als Rundzellen (32) ausgebildet sind.

9. Fahrzeug (10) mit einer Anordnung von Batteriemodulen (22) nach einem der Ansprüche 1 bis 8, wobei das Fahrzeug (10) einen elektrischen Antrieb aufweist und wobei die Batteriemodule (22) dem Speichern von elektrischer Energie für den Antrieb dienen.

## Claims

1. Arrangement of battery modules (22), which comprise a plurality of battery cells (32), in a vehicle (10) in a space between a lower plate (20) and an upper plate (18) of a body assembly (14),
**characterised in that**
at least two adjacent battery modules (22) each comprise sliding faces (26) along which the two adjacent battery modules (22) can move relative to one another, together with a change in their position in the space between the two plates (20, 18) of the body assembly (14), as a result of an application of force (28), the battery modules (22) being triangular-prism-shaped and a base (24) of each of the prisms facing the lower plate (20) and the upper plate (18) in an alternating manner and the sliding faces (26) being provided by side faces of the triangular prisms that are adjacent to the base (24).

2. Arrangement according to claim 1,
**characterised in that**
the body assembly comprises a vehicle floor (14).

3. Arrangement according to either claim 1 or claim 2,
**characterised in that**
a longitudinal direction (L) of the battery module (22) arranged in a central region of the body assembly (14) substantially corresponds to the vehicle longitudinal direction.

4. Arrangement according to any of claims 1 to 3,
**characterised in that**
a longitudinal direction (L) of the battery module (22) arranged in a front region and/or in a rear region of the body assembly substantially corresponds to the vehicle transverse direction.

5. Arrangement according to any of claims 1 to 4,
**characterised in that**
the battery cells (32) of each battery module (22) are accommodated in a main body that provides the sliding faces (26).

6. Arrangement according to claim 5,
**characterised in that**
the main body is formed as a housing for the battery cells (32).

7. Arrangement according to either claim 5 or claim 6,
**characterised in that**
the main body is formed as a support structure for the battery cells (32).

8. Arrangement according to any of claims 1 to 7,
**characterised in that**
the battery cells are round cells (32).

9. Vehicle (10) comprising an arrangement of battery modules (22) according to any of claims 1 to 8, wherein the vehicle (10) comprises an electric drive and wherein the battery modules (22) are used to store electrical energy for the drive.

## Revendications

1. Aménagement de modules de batterie (22) comprenant une pluralité d'éléments de batterie (32) dans un véhicule automobile (10) dans un espace intermédiaire entre une plaque inférieure (20) et une plaque supérieure (18) d'un ensemble de carrosserie (14),
**caractérisé en ce que**
au moins deux modules de batterie voisins (22) présentent des surfaces de glissement respectives (26) le long desquelles les deux modules de batterie voisins (22) peuvent être déplacés l'un par rapport à l'autre à la suite d'une sollicitation de force (28) en modifiant leur position dans l'espace intermédiaire entre les deux plaques (20, 18) de l'ensemble de carrosserie (14), dans lequel les modules de batterie (22) présentent la forme d'un prisme triangulaire et dans lequel la base (24) d'un prisme respectif est tournée en alternance vers la plaque inférieure (20) et la plaque supérieure (18) et les surfaces de glissement (26) sont ménagées par les faces latérales des prismes triangulaires limitrophes de la base (24).

2. Aménagement selon la revendication 1,
**caractérisé en ce que** :
l'ensemble de carrosserie comprend un plancher de véhicule (14).

3. Aménagement selon la revendication 1 ou la revendication 2,
**caractérisé en ce que** :
la direction d'extension longitudinale (L) des modules de batterie (22) disposés dans une zone centrale de l'ensemble de carrosserie (14) coïncide sensiblement avec la direction longitudinale du véhicule.

4. Aménagement selon l'une quelconque des revendications 1 à 3,
**caractérisé en ce que** :
la direction d'extension longitudinale (L) des modules de batterie (22) disposés dans une zone avant et/ou une zone arrière de l'ensemble de carrosserie coïncide sensiblement avec la direction transversale du véhicule.

5. Aménagement selon l'une quelconque des revendications 1 à 4,
**caractérisé en ce que** :
les éléments de batterie (32) d'un module de batterie respectif (22) sont reçus dans un corps de base ménageant les surfaces de glissement (26).

6. Aménagement selon la revendication 5,
**caractérisé en ce que** :
le corps de base se présente sous la forme d'un boîtier pour les éléments de batterie (32).

7. Aménagement selon la revendication 5 ou la revendication 6,
**caractérisé en ce que** :
le corps de base se présente sous la forme d'une structure de support pour les éléments de batterie (32).

8. Aménagement selon l'une quelconque des revendications 1 à 7,
**caractérisé en ce que** :
les éléments de batterie se présentent sous la forme d'éléments ronds (32).

9. Véhicule automobile (10) comprenant un aménagement de modules de batterie (22) selon l'une quelconque des revendications 1 à 8, dans lequel le véhicule (10) présente une commande électrique et dans lequel les modules de batterie (22) servent à stocker de l'énergie électrique pour la commande.
